# EUROPÄISCHE PATENTSCHRIFT

(11) **EP 1 841 578 B1**
(45) Veröffentlichungstag und Bekanntmachung des Hinweises auf die Patenterteilung: **22.07.2009**
(21) Anmeldenummer: 06700995.1
(22) Anmeldetag: 03.01.2006
(51) Int. Cl.: B29C 35/08, B29C 44/34, C08G 18/50

(54) **VERFAHREN UND VORRICHTUNG ZUR HERSTELLUNG VON SCHAUMFORMTEILEN AUF POLYURETHANBASIS**
METHOD AND DEVICE FOR PRODUCTION OF MOULDED FOAM PIECES MADE FROM POLYURETHANE
PROCEDE ET DISPOSITIF DE FABRICATION DE PIECES MOULEES EXPANSEES A BASE DE POLYURETHANE

(30) Priorität: 05.01.2005 DE 102005000860
(43) Veröffentlichungstag der Anmeldung: 10.10.2007
(73) Patentinhaber: FRIMO Group GmbH, 49504 Lotte (DE); BASF SE, 67056 Ludwigshafen (DE); KraussMaffei Technologies GmbH, 80997 München (DE); Bayerische Motoren Werke Aktiengesellschaft, 80788 München (DE)
(72) Erfinder: SCHWARZE, Bernd, 49565 Bramsche (DE); KERN, Hans-Jürgen, 83093 Bad Endorf (DE); LUDWIG, Olaf, 85232 Bergkirchen (DE); FLEISCHMANN, Stefan, 84034 Landshut (DE); LESSER, Roman, 84030 Ergolding (DE); LAUSE, Jürgen, 49205 Hasbergen (DE); PARTUSCH, Georg, 49448 Lemfördé (DE); MICHL, Manfred, 86919 Utting (DE)
(74) Vertreter: Moldenhauer, Herbert
(86) Internationale Anmeldenummer: PCT/EP2006/000011
(87) Internationale Veröffentlichungsnummer: WO 2006/072566

(56) Entgegenhaltungen:
- WO-A-20/05051628
- US-A- 5 073 315
- DATABASE WPI Section Ch, Week 198015 Derwent Publications Ltd., London, GB; Class A32, AN 1980-26326C XP002372587 & JP 55 028803 A (HITACHI LTD) 29. Februar 1980 (1980-02-29)

## Beschreibung

### Technisches Gebiet

Die Erfindung betrifft ein Verfahren zur Herstellung von Schaumformteilen auf Polyurethanbasis, bei dem ein dazu geeignetes Reaktionsgemisch in eine Kavität eines Werkzeugs eingegeben, die Kavität geschlossen und das Reaktionsgemisch durch seine chemische Reaktion in die Gestalt der Kavität überführt, verfestigt und das dabei gebildete Schaumformteil nach dem Öffnen des Werkzeugs aus der Kavität entnommen wird, wobei die Reaktion des Reaktionsgemisches durch Mikrowellen beschleunigt wird, die nach dem mikrowellen-dichten Verschließen des Werkzeugs in die Kavität eingeleitet werden.

### Stand der Technik

Ein solches Verfahren ist aus DATABASE WPI Section Ch, Week 198015 DERwentz Publicatins Ltd., London, GB; Class A32, AN 1980-26326C XP002372587 & JP-A-55028803 bekannt. Dabei kann in der Kavität eine vorgeformte ABS - Folie verwendet werden.

Ein weiteres Verfahren dieser Art ist in DE-C-198 22 113 beschrieben. Es gelangt bei der Herstellung von Schaumformteilen zur Anwendung, die als Innenraumverkleidungen oder Armaturenbretter in Kraftfahrzeugen zur Anwendung gelangen können. Sie sind gewöhnlich im Bereich der Sichtseite mit einer weichelastischen Kunststofffolie überzogen, die mit einer lederähnlichen Narbung versehen ist, und im Bereich der Rückseite mit einem Trägerelement aus Metall oder Kunststoff, das in den dazwischen angeordneten Schaumstoffblock aus Reaktionsschaum eingebettet ist. Der Schaumstoffblock besteht je nach Anwendungsfall aus einem mehr oder weniger hart eingestellten Polyurethanschaum üblicher Zusammensetzung, der die Kunststofffolie und das Trägerelement miteinander verklebt und zusammenhält. Er verleiht der Oberfläche außerdem je nach Anwendungsfall mehr oder weniger weichelastische Eigenschaften.

Solche Verbundelemente werden üblicherweise hergestellt, indem eine weichelastische Kunststofffolie oder andere Dekormaterialien, wie KunststoffFolien, -Häute, Leder u. Textilbezüge, in ein Unterteil von Schäumwerkzeugen eingelegt werden, optionale Versteifungen (Träger) am Werkzeugoberteil befestigt werden, eine Polyurethan-Reaktionsmischung durch Vermischen von zumindest einer Komponente, enthaltend Isocyanat, und einer Komponente, enthaltend eine isocyanatreaktive Verbindung, hergestellt und in das Werkzeug eingetragen und das Werkzeug dann geschlossen wird. Das Polyurethan-Reaktionsgemisch beginnt nun aufzuschäumen, verdrängt durch einen belassenen Spalt zwischen Dekor und Träger die Luft und füllt den Zwischenraum mit Schaum. Idealerweise wird, wenn der Schaum am Rand der Kavität austritt (Austrieb), die rundumlaufende Dichtung in diesem Randbereich aufgeblasen und somit Dekor und Träger gasdicht aufeinander gepresst. Es folgt die Verdichtung u. die Ausreaktion des Schaumes.

Um die Taktzeit zu erhöhen und schnelle Entformzeiten zu erreichen, werden üblicherweise hoch katalysierte Polyurethan-Reaktionsgemische eingesetzt. Diese reagieren so schnell, dass das hergestellte Verbundelement häufig bereits innerhalb von 60 bis 90 Sekunden nach Beginn des Einbringens der Polyurethan- Reaktionsmischung in die Form eine Festigkeit besitzt, die ausreichend ist, dass das Verbundelement aus der Form entnommen werden kann. Diese hohen Reaktionsgeschwindigkeiten werden durch eine hohe Katalysatorzugabe erreicht.

Der Einsatz von hochaktiven tertiären Aminen als Katalysator führt in der Regel zu sehr hohen Emissionen von Katalysator bzw. Abbauprodukten der Komponenten im fertigen Bauteil, was zu Geruchsbelästigung sowie bei Migration in die Deckschichten zu unerwünschten Wechselwirkungen führt, wie Verfärbung und Versprödung der Deckschichten. Die Verwendung von einbaubaren Aminen als Katalysator kann bei hohen Temperaturen und/oder Feuchtigkeit zur Rückspaltung und damit zur Zerstörung der mechanischen Eigenschaften des Schaumes und auch des Dekors führen.

Ein wesentlicher Nachteil solcher hoch katalysierten Systeme ist, dass die Viskosität der Reaktionsmischung nach deren Herstellung sehr schnell ansteigt. Daher ist es erforderlich, das Bauteil sehr schnell zu füllen. Durch die dadurch bedingten hohen Fließgeschwindigkeiten der Reaktionsmischung, insbesondere, wenn es sich um ein kompliziertes Bauteil handelt, kommt es zu unkontrollierten Lufteinschlüssen (Lunkern) im Formteil. Weiter bilden sich unterschiedliche Fließfronten, die ebenfalls zu Lufteinschlüssen führen können. Kleinere Fehlstellen können repariert werden (Nacharbeit), große Lunker führen zu Ausschuss.

Es ist bekannt, die Reaktion der Reaktionspartner durch eine Erwärmung des Formwerkzeuges mittels einer Heizeinrichtung zu beschleunigen. Die dabei zur Anwendung gelangende Temperatur lässt sich jedoch nicht beliebig hoch wählen, weil zu hohe Temperaturen zu einer Gefährdung der mit der Beschickung der Werkzeuge beschäftigten Personen führen könnten. Außerdem würde die Reaktion beim Eingeben der nötigen Menge des benötigten Reaktionsgemisches in ein zu heißes, offenes Werkzeug so schnell anspringen, dass das Werkzeug nicht mehr schnell genug geschlossen werden könnte mit der Folge fehlerhafter Teile. Die so erreichbaren Taktzeiten sind dadurch nach unten begrenzt.

Aus der US-A-5073315 war eine Vorrichtung zur Durchführung eines solchen des Verfahrens bekannt, umfassend ein Werkzeug mit einer Kavität, die in allen Teilbereichen mikrowellendicht umschlossen und mit zumindest einem Magnetron verbunden ist.

### Darstellung der Erfindung

Der Erfindung liegt die Aufgabe zu Grunde, ein Verfahren und eine zu seiner Anwendung geeignete Vorrichtung zu zeigen, die es gestatten, im Vergleich zum Stand der Technik Technik bei gleichen Entformzeiten Schaumformteile zu erhalten, die deutlich weniger Lunker und eine geringere Geruchsemission als Schaumformteile des Stands der Technik aufweisen.

Weiter ist es Aufgabe der Erfindung, ein solches Verfahren und eine zu seiner Anwendung geeignete Vorrichtung zu zeigen, die es gestatten, bei gleicher Qualität wie im Stand der Technik deutlich verringerte Taktzeiten bei der Herstellung von Schaumformteilen zu erzielen.

Diese Aufgabe wird erfindungsgemäß bei einem Verfahren der eingangs genannten Art durch die kennzeichnenden Merkmale der Patentansprüche 1 und 4 gelöst. Auf vorteilhafte Ausgestaltungen nehmen die darauf jeweils rückbezogenen Unteransprüche Bezug.

Bei dem erfindungsgemäßen Verfahren ist es vorgehen, dass ein Reaktionsgemisch mit einem Katalysator auf Basis eines Polyetheralkohols, erhältlich durch Umsetzung von aliphatischen Verbindungen mit mindestens einer tertiären Aminogruppe im Molekül mit Alkylenoxiden, verwendet wird und dass die Reaktion durch eine zusätzliche Beheizung des Werkzeugs beschleunigt wird.

Weiter kann als Katalysator auch ein Polyetheralkohol eingesetzt werden, der durch Anlagerung von Alkylenoxiden an aliphatische Verbindungen mit mindestens einer tertiären Aminogruppe hergestellt werden kann (f-II). Die Polyetheralkohole werden durch Umsetzung von aliphatischen Verbindungen mit mindestens einer tertiären Aminogruppe im Molekül mit Alkylenoxiden hergestellt. Es ist klar, dass die genannten Verbindungen mindestens eine, vorzugsweise mindestens zwei funktionelle Gruppen, die mit Alkylenoxiden umgesetzt werden können, enthalten muss. Dabei kann es sich insbesondere um Hydroxylgruppen oder primäre oder sekundäre Aminogruppen handeln.

Die genannten aliphatischen Verbindungen mit mindestens einer tertiären Aminogruppe im Molekül haben vorzugsweise ein Molekulargewicht von maximal 400 g/mol.

Vorzugsweise kommen solche Verbindungen zum Einsatz, wie sie üblicherweise als einbaubare Katalysatoren bei der Herstellung von Polyurethanen eingesetzt werden.

Vorzugsweise ist die aliphatischen Verbindung mit mindestens einer tertiären Aminogruppe zur Herstellung der Polyetheralkohole (f-II) ausgewählt aus der Gruppe, enthaltend Dimethylaminoethylamin, N,N-Dimethylaminopropylamin, Diethylaminoethylamin, Diethylaminopropylamin, N-(3-Dimethylaminopropyl-N,N-diisopropanolamin, Dimethylethanolamin, N,N,N'-Trimethyl-N'-hydroxyethyl-bis(aminoethyl)ether, N,N-Bis-(3-dimethylaminopropyl)amino-2-propanolamin, Bis-(N,N-dimethyl-3-aminopropyl)amin, N,N-Dimethylaminoethoxy-ethanol, N-(3-Aminopropyl)imidazol, N-(2-Dimethylaminoethyl-)N-methylethanolamin, N-(2-Hydroxypropyl)imidazol, Dimethylaminohexanol sowie Gemische aus mindestens zwei der genannten Verbindungen.

Vorzugsweise weist eine erfindungsgemäße Reaktionsmischung (B) zumindest einen Katalysator (f-II) auf.

Die Menge an Katalysator, die in einem erfindungsgemäßen Reaktionsgemisch eingesetzt wird, ist nicht beschränkt. Üblicherweise werden Katalysatoren in einer Menge von 0,1 bis 5 Gewichtsteilen, bezogen auf 100 Gewichtsteile der Komponenten (b) und gegebenenfalls (c) eingesetzt. Werden dabei Polyetheralkohole eingesetzt, die ein tertiäres Amin enthalten, wird als Katalysatorgewicht nur die anteilige Masse des tertiären Amins verstanden.

Der Gehalt an Katalysator und dessen Aktivität sind Faktoren, welche die Geschwindigkeit der Polyurethanreaktion bestimmen. So kann durch Variation der Katalysatorkonzentration die Reaktionsgeschwindigkeit der Polyurethanreaktion angepasst werden.

Ein weiterer Parameter zur Anpassung der Reaktionsgeschwindigkeit ist die Temperatur des Reaktionsgemischs. Ein besonderer Vorteil der erfindungsgemäß eingesetzten Mikrowellenenergie ist, dass die Temperaturerhöhung direkt im Reaktionsgemisch erfolgt. Im Gegensatz zum indirekten Heizen des Reaktionsgemischs durch Temperierung der Form kann somit die Temperatur der Reaktionsmischung innerhalb kurzer Zeit erhöht werden. Es ist daher möglich, die Reaktionsgeschwindigkeit der Reaktionsmischung gezielt zu einem gewünschten Zeitpunkt zu erhöhen. Somit kann nach Schließen der Form durch Einbringen von Mikrowellenenergie die Temperatur und damit die Reaktivität der Reaktionsmischung erhöht werden, was ein schnelles Ausreagieren und damit auch ein schnelles Entformen des hergestellten Schaumformteils ermöglicht.

Das Einbringen von Mikrowellenenergie in eine Reaktionsmischung kann daher dazu genutzt werden, die Taktzeiten eines bestehenden Systems zu verringern. Dabei werden die Entformzeiten einer Reaktionsmischung durch Bestrahlung mit Mikrowellenenergie vorzugsweise um 20 %, besonders bevorzugt um 40 % und insbesondere um 50 % verringert. Dabei wird unter der Entformzeit einer Reaktionsmischung die Zeit Verstanden, die eine Reaktionsmischung mindestens in einer geschlossenen Form verbleiben muss, bevor das hergestellte Formteil ohne Beschädigung entnommen werden kann.

Weiter kann auch eine gegenüber den üblicherweise verwendeten Reaktionsmischungen zur Herstellung der Polyurethanschaumstoffe (B) eine weniger reaktive Reaktionsmischung, die beispielsweise weniger Katalysator enthält, eingesetzt werden. Dies hat den Vorteil, dass die weniger reaktive Reaktionsmischung nach dem Vermischen nur langsam reagiert und dadurch in dieser Phase nur ein geringer Viskositätsanstieg erfolgt. Damit ist es möglich, insbesondere komplizierte Formen durch langsames Befüllen optimal zu füllen. Ist die Form gefüllt, kann dann die Reaktionsgeschwindigkeit der Reaktionsmischung durch Einbringen von Mikrowellenenergie erhöht werden. So können mit dem erfindungsgemäßen Verfahren bei Einsatz weniger reaktiver Reaktionsmischungen ähnliche Taktzeiten erreicht werden, wie üblicherweise nur unter Verwendung von hochreaktiven Reaktionsmischungen. Die so hergestellten fertigen Teile zeigen weniger Fehlstellen und die Verwendung von weniger Katalysator führt zu einer geringeren Geruchsemission.

In der Reaktionsmischung zur Herstellung der Polyurethanschaumstoffe (B) können gegebenenfalls noch Hilfsmittel und/oder Zusatzstoffe (g) enthalten sein. Genannt seien beispielsweise Schaumstabilisatoren, Hydrolyseschutzmittel, Porenregler, fungistatisch und bakteriostatisch wirkende Substanzen, Farbstoffe, Pigmente, oberflächenaktive Stoffe und Flammschutzmittel.

Bei der technischen Herstellung von Polyurethan-Schaumstoffen ist es üblich, die Verbindung (b) mit den gegebenenfalls verwendeten Verbindungen (c) bis (g) vor der Umsetzung mit den Verbindungen (a) zu einer sogenannten Polyolkomponente zu vereinigen.

Bei der Herstellung der erfindungsgemäßen Polyurethane werden Isocyanate (a) und Verbindungen mit gegenüber Isocyanaten reaktiven Wasserstoffatomen in einer solchen Menge zusammengebracht, dass der Index vorzugsweise zwischen 50 und 200, besonders bevorzugt zwischen 70 bis 150 und insbesondere zwischen 80 bis 120 liegt. Dabei versteht man unter Index das Verhältnis von Isocyanatgruppen zu gegenüber Isocyanaten reaktiven Wasserstoffatomen multipliziert mit 100.

Die Herstellung der Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen hergestellt werden. Möglich sind auch zwei Angüsse an einem Formwerkzeug, wo man die Ausgangsverbindungen zeitgleich bzw. nacheinander eintragen kann.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug gebracht.

Mikrowellen sind an sich bekannt. Sie haben in Bezug auf die Lösung der vorliegenden Aufgabe jedoch noch keine Verwendung gefunden. Die optimale Leistung der zur Anwendung gelangenden Magnetrone hängt maßgeblich ab von der Menge und Art des im Einzelfall zur Anwendung gelangenden Reaktionsgemisches sowie von der Werkzeuggröße. Sie kann im konkreten Fall durch einfache Versuche bestimmt und zur Anwendung gebracht werden.

Formteile zur Verwendung in Kraftfahrzeugen, beispielsweise Armaturenbretter, sind häufig von lang gestreckter Gestalt. Um auch unter solchen Bedingungen eine beschleunigte Reaktion des Reaktionsgemisches in allen Teilbereichen zu gewährleisten, hat es sich als vorteilhaft bewährt, wenn die Mikrowellen an wenigstens zwei Stellen in die Kavität eingeleitet werden, die einen Abstand von einander haben.

De Reaktion kann ferner durch eine Beheizung des Werkzeugs zusätzlich beschleunigt werden, beispielsweise durch die Beheizung wenigstens einer Werkzeughälfte auf eine Grundtemperatur von 40 bis 45°C. Dabei können übliche Heizmittel zur Anwendung gelangen, beispielsweise elektrische Heizeinrichtungen oder Heizeinrichtungen, die sich der Verwendung von erwärmtem Öl oder Wasser bedienen. Grundtemperaturen dieses Niveaus sind in jeder Hinsicht unkritisch.

Die Reaktion des Reaktionsgemisches wird durch durch die Mikrowellen beschleunigt, die nach dem Schließen der Kavität in diese eingeleitet werden. Das Reaktionsgemisch wird dadurch nach seiner Überführung in die Kavität und nach dem Verschließen der Kavität zugleich in seinem gesamten Querschnitt und Volumen gleichmäßiger und zügiger auf die optimale Reaktionstemperatur erwärmt, als das mit den bisherigen Heizvorrichtungen der Formwerkzeuge möglich war. Die Mikrowellenstrahlung wir nur bei geschlossenem Werkzeug in die Kavität geleitet, d.h. zu einem Zeitpunkt, zu dem am Werkzeug Manipulationen nicht mehr vorgenommen werden müssen und sich das Werkzeug außerhalb des Arbeitsbereiches des Bedienungspersonals befindet, wenn es in üblicher Weise in großer Stückzahl in einem Karussell beweglich angeordnet ist, um die Reaktion des Reaktionsgemisches sicher zum Abschluss gelangen zu lassen. Eine solche Anordnung ist in der Massenproduktion entsprechender Schaumformteile gebräuchlich. Gefährdungen von Personen sind dementsprechend völlig ausgeschlossen. Auch bedürfen die zur Werkzeugbeschickung benötigten Zeiten, d.h. die zum Einlegen der Kunststofffolie und des Trägers benötigten Taktzeiten keiner Reduzierung. Für das Bedienungspersonal bedingt die Erfindung daher keine Veränderung der Handhabungen.

In einer bevorzugten Ausführungsform werden mit dem erfindungsgemäßen Verfahren Verbundelemente zur Verwendung im Kraftfahrzeug-Innenbau, beispielsweise Instrumententafeln, Seiten- und Türseitenverkleidungen, Mittelkonsolen und/oder Armlehnen, Handschuhkasten, Knieschutz,

Airbagdeckel, Türspiegel und bevorzugt Instrumententafeln hergestellt. Diese umfassen eine Außenschicht (A), einen Polyurethanschaumstoff (B) und gegebenenfalls eine Trägerschicht (C).

Als Außenschicht (A) werden üblicherweise Materialien verwendet, die dem Verbundelement ein dekoratives Äußeres verleihen, wie beispielsweise Kunststofffolien, Textilien und/oder Leder. Bevorzugt werden PUR-Sprüh- oder Gieß- oder Slushhäute und/oder PVC-Slushhäute, sowie tiefgezogene Folien aus Thermoplastmaterialien verwendet. Die Dicke der Außenschicht beträgt im allgemeinen 0,6 bis 2 mm, bevorzugt von 0,8 bis 1,2 mm.

Als Polyurethanschaumstoff (B) sind im allgemeinen alle Polyurethanschaumstoffe, erhältlich durch Umsetzung von Isocyanaten mit Verbindungen, die mindestens zwei gegenüber Isocyanaten reaktive Wasserstoffe aufweisen, denkbar. Bevorzugt verwendet werden Polyurethanhalbhartschaumstoffe mit einer Druckfestigkeit nach DIN 53421 von 15 bis 80 kPa, bevorzugt von 30 bis 70 kPa. Die Schicht aus Polyurethanschaumstoff weist üblicherweise eine Dicke von 1 bis 50 mm, bevorzugt von 4 bis 20 mm auf.

Als Trägerschicht (C) kommen im allgemeinen alle Materialien in Frage, welche die mechanischen Eigenschaften des resultierenden Verbundelements positiv beeinflussen. Beispiele hierfür sind Holzfaser-Trägerteile , glasfaserverstärkte Thermoplaste oder Duromer-Trägerteile, gegebenenfalls auch Trägerteile aus Leicht-Metall. Die Trägerelemente weisen üblicherweise eine Dicke von 1 mm bis 10 mm, bevorzugt von 1,5 mm bis 3 mm auf.

Vorzugsweise wird ein Polyurethanschaumstoff (B) hergestellt, indem zumindest ein Isocyanat (a) und eine Verbindung (b), die mindestens zwei gegenüber Isocyanaten reaktive Wasserstoffe aufweist, gemischt werden. Die so hergestellten Reaktionsmischungen werden dann in die Form eingebracht.

Als Isocyanat (a) kommen für das erfindungsgemäße Verfahren alle Isocyanate mit zwei oder mehr Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI), zum Einsatz. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate. Bevorzugte Prepolymere sind Urethangruppen und Isocyanatgruppen enthaltende MDI-Prepolymere mit einem NCO-Gehalt zwischen 20 und 35 % bzw. deren Mischungen mit Polymethylenpolyphenylenpolyisocyanaten (Roh-MDI).

Als Verbindungen mit mindestens zwei gegenüber Isocyanaten reaktiven Wasserstoffatomen (b) kommen insbesondere Polyesteralkohole und vorzugsweise Polyetheralkohole mit einer Funktionalität von 1,7 bis 8, insbesondere von 2 bis 4, vorzugsweise 2 bis 3 und einem Molekulargewicht im Bereich von 400 bis 8500, vorzugsweise 1000 bis 6000 in Betracht. Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glyzerin, Trimethylolpropan oder Pentaerythrit, sowie höherwertige Alkohole, wie Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Die Anlagerung der Alkylenoxide, insbesondere Ethylenoxid und/oder Propylenoxid, an die H-funktionellen Startsubstanzen erfolgt insbesondere katalytisch. Als Katalysatoren werden vorzugsweise basische Verbindungen, insbesondere Hydroxide von Alkalimetallen, eingesetzt. In jüngerer Zeit werden häufig Multimetallcyanidverbindungen, auch als DMC-Katalysatoren bezeichnet, eingesetzt.

Als Polyetheralkohole können auch polymermodifizierte Polyetheralkohole eingesetzt werden. Diese werden zumeist durch in-situ-Polymerisation von olefinisch ungesättigten Monomeren, insbesondere Acrylnitril und/oder Styrol in den Polyetheralkoholen hergestellt. Zu den polymermodifizierten Polyetheralkoholen gehören auch Polyharnstoffdispersionen enthaltende Polyetheralkohole.

Die polymermodifizierten Polyetheralkohole haben vorzugsweise eine Hydroxy-Izahl im Bereich 10 bis 100 mg KOH/g, bevorzugt 15 bis 60 mgKOH/g, und vorzugsweise einen Feststoffanteil von 2-60 Gew.-%, bevorzugt von 5-50 Gew.-%.

Für bestimmte Einsatzgebiete kann es zweckmäßig sein, dass die Reaktionsmischung zur Herstellung der Polyurethanschaumstoffe (B) neben den genannten Verbindungen (a) und (b) zusätzlich sogenannte Kettenverlängerungsmittel und/oder Vernetzungsmittel (c) enthält. Als derartige Mittel kommen polyfunktionelle, insbesondere di- und trifunktionelle Verbindungen mit Molekulargewichten von 62 bis 400, in Betracht. Verwendet werden beispielsweise Di-und Trialkanolamine, wie Diethanolamin und Triethanolamin, aliphatische und aromatische Diamine, wie Ethylendiamin, Butylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, Propylenglykol, 1,4'-Butylenglykol, 1,6-Hexamethylenglykol, Glyzerin und Trimethylolpropanoder 2-funktionelle Polyalkylenoxide. Vorzugsweise werden ausschließlich alkoholische Kettenverlängerungsmittel und/oder Vernetzungsmittel eingesetzt.

Sofern Kettenverlängerungs- oder Vernetzungsmittel (c) eingesetzt werden, kommen diese in Mengen von 1 bis 20 Gew.-Teilen, vorzugsweise von 3 bis 10 Gew.-Teilen pro 100 Gew.-Teile Der Komponente (b) zur Anwendung.

Weiter enthält die Reaktionsmischung zur Herstellung der Polyurethanschaumstoffe (B) ein Treibmittel (d). Als Treibmittel (d) für das erfindungsgemäße Verfahren wird zumeist Wasser, das mit Isocyanatgruppen unter Bildung von Kohlendioxid reagiert, eingesetzt. Die Wassermengen, die zweckmäßigerweise verwendet werden, betragen, abhängig von der angestrebten Dichte der Schaumstoffe, 0,1 bis 8 Gewichtsteile, vorzugsweise 1,2 bis 5 Gewichtsteile, bezogen auf 100 Gewichtsteile Komponente b).

Im Gemisch mit Wasser können gegebenenfalls auch sogenannte physikalisch wirkende Treibmittel eingesetzt werden. Dies sind Flüssigkeiten, welche gegenüber den Rezepturbestandteilen inert sind und Siedepunkte unter 100°C, vorzugsweise unter 50°C, insbesondere zwischen -50°C und 30°C bei Atmosphärendruck aufweisen, so dass sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und isoButan und Propan, Ether, wie Dimethlyether und Diethylether, Ketone, wie Aceton und Methylethylketon, Ethylacetat und halogenierte Kohlenwasserstoffe. Auch Gemische dieser niedrigsiedenden Flüssigkeiten untereinander und/oder mit anderen substituierten oder unsubstituierten Kohlenwasserstoffen können verwendet werden.

Als Treibmittel kann auch Kohlendioxid eingesetzt werden, das vorzugsweise als Gas in den Ausgangskomponenten gelöst wird.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile der Komponente (b).

Vorzugsweise enthält die Reaktionsmischung zur Herstellung der Polyurethan-schaumstoffe (B) weiter Füll- oder Verstärkungsstoffe (e). Diese sind vorzugsweise in einer Menge von 0 bis 60 Gewichtsteile, bevorzugt von 1 bis 30 Gewichtsteile, mehr bevorzugt von 5 bis 20 Gewichtsteile, bezogen auf 100 Gewichtsteile der Komponente (b) enthalte und dienen im allgemeinen einer Verstärkung des Polyurethans und damit einer Verbesserung seiner mechanischen Eigenschaften. Bevorzugt werden die Füll- oder Verstärkungsstoffe in Form von Fasern und/oder Plättchen eingesetzt.

Vorzugsweise enthält die Reaktionsmischung zur Herstellung der Polyurethanschaumstoffe (B) weiter Katalysatoren (f). Dies sind Verbindungen, welche die Reaktion der Komponente (a) mit der Komponente (b) beschleunigen. In Frage kommen beispielsweise niedermolekulare Katalysatoren (f-I), wie tertiäre Amine und/oder organische Metallverbindungen, insbesondere Zinnverbindungen. Beispielsweise können als niedermolekulare Katalysatoren (f-I) folgende Verbindungen eingesetzt werden: Triethylendiamin, Aminoalkyl- und/oder Aminophenyl-imidazole und/oder Zinn-(II)salze von organischen Carbonsäuren.

Als besonders vorteilhaft zur Durchführung des erfindungsgemäßen Verfahrens hat sich eine Vorrichtung bewährt, bei der das Werkzeug von einer metallischen Abschirmung umschlossen und mit zumindest einer zusätzlichen Heizeinrichtung in zumindest einer Werkzeughälfte versehen ist, um die Herstellung von Schaumformteilen noch weiter zu beschleunigen. Eine solche Heizeinrichtung kann aus einer elektrischen Widerstandsheizung bestehen oder aus einer Heizeinrichtung, die sich eines erwärmten Strömungsmittels bedient, beispielsweise der Verwendung von erwärmtem Öl oder Wasser, welches durch Heizkanäle von zumindest einer Werkzeughälfte kontinuierlich hindurchgeleitet wird.

Das Werkzeug enthält eine Kavität, die in allen Teilbereichen von einer metallischen Abschirmung umschlossen und die mit zumindest einem Magnetron verbunden ist. Das Magnetron kann dabei unmittelbar an dem Werkzeugober- oder -unterteil befestigt und automatisch gesteuert sein.

Um die Verbindung zwischen dem Magnetron und der Kavität vor dem Eindringen von funktionsbeeinträchtigenden Fremdkörpern zu schützen, hat es sich als zweckmäßig bewährt, sie durch ein für Mikrowellen durchlässiges Fenster zu erschließen, beispielsweise durch ein Fenster aus Kunststoff. Dieses sollte die Kavität oberflächenbündig begrenzen.

Falls die Mündung der Verbindungsleitung während der bestimmungemäßen Verwendung durch ein für Mikrowellen durchlässiges und in Bezug auf den Reaktionsschaum undurchlässiges Einlegeteil überdeckt wird, beispielsweise durch die Kunststofffolie oder einen Träger aus Kunststoff, die am Fertigteil verbleiben, dann kann auf die Verwendung eines solchen Fensters verzichtet werden, was eine eventuell nötige Reinigung erübrigt.

Nach einer vorteilhaften Ausgestaltung ist es vorgesehen, die Hohlform mit wenigstens einer Einfüllöffnung für das Reaktionsgemisch zu versehen, die zumindest während der Einleitung von Mikrowellen durch eine Abschirmeinrichtung für Mikrowellen verschließbar ist. Die Abschirmeinrichtung ist zweckmäßig mit einer automatischen Betätigungseinrichtung versehen und durch die Betätigungseinrichtung zumindest während der Einleitung von Mikrowellen verschließbar.

Nach einer besonderen Ausgestaltung ist es vorgesehen, dass die Abschirmeinrichtung durch zumindest ein vakuumbeständiges Ventil gebildet ist. Hierdurch ist die Kavität evakuierbar, was die Möglichkeit eröffnet, Schaumformteile von besonders geringer Dichte besonders zügig zu erzeugen.

### Kurzbeschreibung der Zeichnung

Die Erfindung wird nachfolgend an Hand der in der Anlage beigefügten Zeichnung weiter verdeutlicht. Es zeigen:
Fig. 1 eine beispielhafte Vorrichtung zur Durchführung des erfindungsgemäßen Verfahrens in längsgeschnittener, schematischer Darstellung
Fig. 2 eine Ausführung ähnlich Fig. 1, bei der die Verbindungsleitung zwischen der Kavität und dem Magnetron durch ein für Mikrowellen undurchlässiges Ventil verschließbar ist, das zugleich vakuumdicht ist

### Erläuterung der Beispiele:

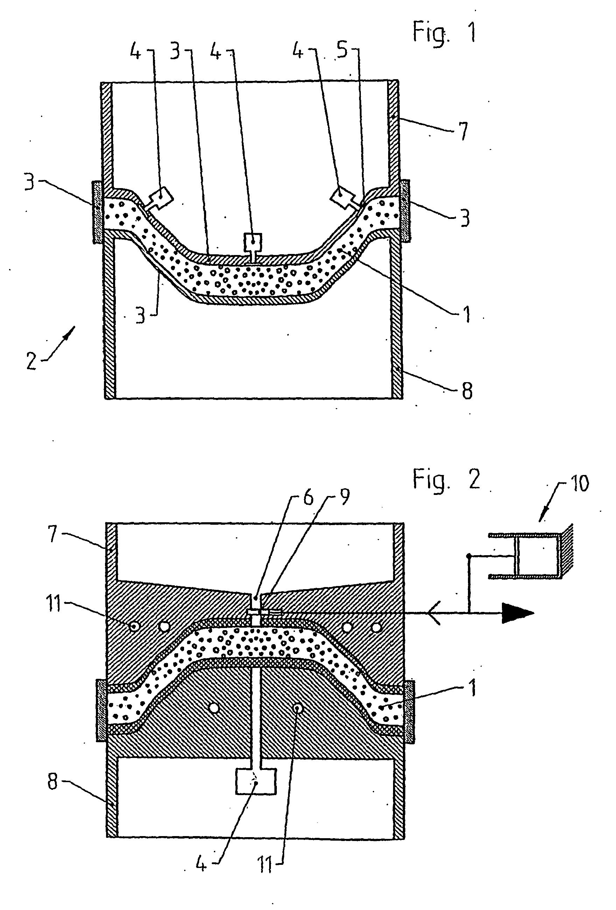

Die in den Fig. 1 und 2 gezeigte Vorrichtung dient zur Durchführung eines Verfahrens zur Herstellung von Schaumformteilen 1 auf Polyurethanbasis, bei dem ein dazu geeignetes Reaktionsgemisch in eine Kavität eines Werkzeugs 2 eingegeben, das Werkzeug 2 geschlossen und das Reaktionsgemisch durch seine chemische Reaktion in die Gestalt der Kavität überführt und das dabei erhaltene Schaumformteil 1 verfestigt und nach dem Öffnen des Werkzeugs 1 aus der Kavität entnommen wird. Die Reaktion des Reaktionsgemisches wird dabei durch Mikrowellen beschleunigt, die nach dem mikrowellen-dichten Verschließen des Werkzeugs 2 in die Kavität eingeleitet werden, um das Reaktionsgemisch in allen Teilbereichen zügig und gleichmäßig auf die optimale Reaktionstemperatur zu bringen und dadurch die bis zur Formung und Aushärtung der Schaumformteile benötigte Reaktionszeit zu verkürzen.

Das aus einem Werkzeugoberteil 7 und einem Werkzeug unterteil 8 bestehende Werkzeug 2 besteht in allen Teilbereichen aus Metall, wobei die Trennfuge durch eine mikrowellendichte, metallische Blende 3 überdeckt und gegebenenfalls durch in der Zeichnung nicht wiedergegebene zusätzliche, polymere Dichtmittel abgedichtet ist.

Die in dem Werkzeug 2 enthaltene Kavität ist bei der Ausführung nach Fig. 1 mit drei Magnetronen 4 verbunden, die sämtlich im Werkzeugoberteil 7 angeordnet sind, wobei die Mündungen der Verbindungsleitungen in Richtung der Kavität oberflächenbündig durch dort eingesetzte Fenster 5 aus Kunststoff abgedeckt sind, um das unbeabsichtigte Eindringen von Fremdstoffen und insbesondere von Reaktionsgemisch zu verhindern.

Bei der Ausführung nach Fig. 2 ist die Kavität mit einer Einfüllöffnung 6 für das Reaktionsgemisch versehen, wobei die Einfüllöffnung 6 durch eine Abschirmeinrichtung für Mikrowellen verschließbar ist. Die Abschirmeinrichtung besteht aus einem Ventil 9, das mit einer automatischen Betätigungseinrichtung 10 verbunden ist. Es wird durch die Betätigungseinrichtung 10 zumindest während der Einleitung von Mikrowellen durch das Magnetron 4 geschlossen. Die Betätigungseinrichtung besteht aus einer Kolben-/Zylindereinheit, die mit einer das Ventil bildenden Schiebereinheit aus metallischem Werkstoff zusammenwirkt.

Das Ventil 9 ist außerdem zumindest vakuumbeständig, was es gestattet, den Schaumformteilen 1 während ihrer Bildung aus dem Reaktionsgemisch durch Anlegen eines Vakuums an die Kavität ein besonders geringes Raumgewicht zu geben und den Aufschäumprozess zu beschleunigen.

Das Ventil 9 kann auch überdruckbeständig ausgebildet sein, was es gestattet, das Raumgewicht merklich zu vergrößern und dadurch eine höhere Festigkeit der Schaumformteile 1 zu erzielen.

Die Ausführung des Werkzeugs nach Fig. 2 ist außerdem mit einer elektrischen Zusatzheizung 11 versehen, die aus elektrischen Widerständen besteht, die in Bohrungen des Werkzeugsoberteils 7 und des Werkzeugunterteils 8 angeordnet sind. Die Widerstandsheizung sind so bemessen und geregelt, dass das Werkzeugober- und -unterteil eine durchschnittliche Basistemperatur von 45 °C aufweist.

### Zur Funktion ist Folgendes auszuführen:

Die in den Zeichnungen gezeigte Vorrichtung dient zum Herstellen von Schaumformteilen 1 auf Polyurethanbasis. Dabei wird ein geeignetes Reaktionsgemisch, das Diisozyanat und Polyol als Reaktionskomponenten enthält, in eine Kavität entsprechender Gestalt des Werkzeugs 2 eingegeben. Das Werkzeug 2 wird geschlossen und das Reaktionsgemisch durch seine chemische Reaktion aufgebläht, wobei es die Gestalt der Kavität annimmt und damit zugleich in die Gestalt des Schaumformteils 1 überführt und verfestigt wird, so dass es nach dem Öffnen des Werkzeugs 1 aus der Kavität entnommen werden kann. Die Reaktion des Reaktionsgemisches wird bei diesem Prozess durch Mikrowellen beschleunigt, die nach dem mikrowellen-dichten Verschließen des Werkzeugs 2 in die Kavität eingeleitet werden.

Die Einleitung der Mikrowellen erfolgt gemäß Fig. 1 an drei Stellen parallel zueinander, die einen Abstand von einander haben. Die Magnetrone sind dabei so geschaltet, dass sie sich in ihrer Wirkung ergänzen. Hierdurch in Verbindung mit der durch Versuche ermittelten, optimierten Leistung wird das Reaktionsgemisch zügig auf seine optimale Reaktionstemperatur erwärmt, was den Herstellprozess der Schaumformteile 1 erheblich beschleunigt.

Da das Werkzeug 2 durch die Zusatzheizung bereits vor Beginn des Prozesses eine Grundtemperatur von 45°C aufweist, ist für die Erwärmung auf die optimale Reaktionstemperatur nur minimale Zeit erforderlich. Die Taktzeiten bei der Herstellung von Schaumformteilen werden dadurch erheblich vermindert, was unter wirtschaftlichen Gesichtspunkten von Vorteil ist.

## Patentansprüche

1. Verfahren zur Herstellung von Schaumformteilen (1) auf Polyurethanbasis, bei dem ein dazu geeignetes Reaktionsgemisch in eine Kavität eines Werkzeugs (2) eingegeben, die Kavität geschlossen und das Reaktionsgemisch durch seine chemische Reaktion in die Gestalt der Kavität überführt, verfestigt und das dabei gebildete Schaumformteil nach dem Öffnen des Werkzeugs (2) aus der Kavität entnommen wird, wobei die Reaktion des Reaktionsgemisches durch Mikrowellen beschleunigt wird, die nach dem mikrowellen-dichten Verschließen des Werkzeugs (2) in die Kavität eingeleitet werden, **dadurch gekennzeichnet, dass** ein Reaktionsgemisch mit einem Katalysator auf Basis eines Polyetheralkohols, erhältlich durch Umsetzung von aliphatischen Verbindungen mit mindestens einer tertiären Aminogruppe im Molekül mit Alkylenoxiden, verwendet wird und dass die Reaktion durch eine zusätzliche Beheizung des Werkzeugs (2) beschleunigt wird.

2. Verfahren nach Anspruch 1, **dadurch gekennzeichnet, dass** das Werkzeug auf eine Temperatur von 40 bis 45°C erwärmt wird.

3. Verfahren nach Anspruch 1, **dadurch gekennzeichnet, dass** die Mikrowellen an wenigstens zwei Stellen in die Kavität eingeleitet werden, die einen Abstand von einander haben.

4. Verfahren nach einem der Ansprüche 1 bis 3, **dadurch gekennzeichnet, dass** die Entformzeit durch die Bestrahlung mit Mikrowellenenergie um 20% reduziert wird.

5. Vorrichtung zur Durchführung des Verfahrens nach einem der Ansprüche 1 bis 4, umfassend ein Werkzeug (2) mit einer Kavität, die in allen Teilbereichen mikrowellendicht und von einer metallischen Abschirmung (3) umschlossen und mit zumindest einem Magnetron (4) verbunden ist, **dadurch gekennzeichnet, dass** das Werkzeug mit zumindest einer zusätzlichen Heizeinrichtung (11) in zumindest einer Werkzeughälfte (7, 8) versehen ist.

6. Vorrichtung nach Anspruch 5, **dadurch gekennzeichnet, dass** die Verbindung zwischen dem Magnetron (4) und der Kavität durch ein für Mikrowellen durchlässiges Fenster (5) verschlossen ist.

7. Vorrichtung nach Anspruch 6, **dadurch gekennzeichnet, dass** das Fenster (5) die Kavität oberflächenbündig begrenzt.

8. Vorrichtung nach einem der Ansprüche 1 bis 7, **dadurch gekennzeichnet, dass** die Kavität mit wenigstens einer Einfüllöffnung (6) für das Reaktionsgemisch versehen ist und dass die Einfüllöffnung (6) durch eine Abschirmeinrichtung für Mikrowellen verschließbar ist.

9. Vorrichtung nach Anspruch 8, **dadurch gekennzeichnet, dass** die Abschirmeinrichtung mit einer automatischen Betätigungseinrichtung versehen und durch die Betätigungseinrichtung zumindest während der Einleitung von Mikrowellen geschlossen wird.

10. Vorrichtung nach Anspruch 8 oder 9, **dadurch gekennzeichnet, dass** die Abschirmeinrichtung durch ein zumindest vakuumbeständiges Ventil (7) gebildet ist.

11. Vorrichtung nach einem der Ansprüche 5 bis 10, **dadurch gekennzeichnet, dass** die Kavität evakuierbar ist.

## Claims

1. Method for producing moulded foam parts (1) based on polyurethane, in which method a reaction mixture suitable therefor is introduced into a cavity of a tool (2), the cavity is closed and the reaction mixture is converted by its chemical reaction into the form of the cavity, hardens and the moulded foam part formed in the process, after opening the tool (2), is removed from the cavity, the reaction of the reaction mixture being accelerated by microwaves which, after the microwave-tight closing of the tool (2), are introduced into the cavity, **characterised in that** a reaction mixture with a catalyst based on polyether alcohol, obtainable by the reaction of aliphatic compounds with at least one tertiary amino group in the molecule, with alkylene oxides, is used, and **in that** the reaction is accelerated by an additional heating of the tool (2).

2. Method according to claim 1, **characterised in that** the tool is heated to a temperature of 40 to 45°C.

3. Method according to claim 1, **characterised in that** the microwaves are introduced into the cavity at at least two points, which have a spacing from one another.

4. Method according to any one of claims 1 to 3, **characterised in that** the demoulding time is reduced by 20% by the irradiation with microwave energy.

5. Device for carrying out the method according to any one of claims 1 to 4, comprising a tool (2) with a cavity, which is surrounded in all part regicns in a microwave-tight manner and by a metallic screen (3) and is connected to at least one magnetron (4), **characterised in that** the tool is provided with at least one additional heating arrangement (11) in at least one tool half (7, 8).

6. Device according to Claim 5, **characterised in that** the connection between the magnetron (4) and the cavity is closed by a window (5) which is permeable to microwaves.

7. Device according to Claim 6, **characterised in that** the window (5) delimits the cavity flush with the surface.

8. Device according to any one of claims 1 to 7, **characterised in that** the cavity is provided with at least one filling opening (6) for the reaction mixture and **in that** the filling opening (6) can be closed by a screening arrangement for microwaves.

9. Device according to Claim 8, **characterised in that** the screening arrangement is provided with an automatic actuating arrangement and is closed by the actuating arrangement at least during the introduction of microwaves.

10. Device according to claim 8 or 9, **characterised in that** the screening arrangement is formed by an at least vacuum-resistant valve (7).

11. Device according to any one of Claims 5 to 10, **characterised in that** the cavity can be evacuated.

## Revendications

1. Procédé pour la préparation de pièces moulées en mousse (1) à base de polyuréthane, dans lequel un mélange réactionnel approprié à cet effet est introduit dans une cavité d'un outil (2), la cavité est fermée et le mélange réactionnel est transformé à la forme de la cavité par sa réaction chimique, solidifié et la pièce moulée en mousse ainsi formée est prélevée après l'ouverture de l'outil (2) de la cavité, la réaction du mélange réactionnel étant accélérée par des micro-ondes qui sont introduites dans la cavité après la fermeture étanche aux micro-ondes de l'outil (2), **caractérisé en ce qu'**on utilise un mélange réactionnel avec un catalyseur à base d'un polyétheralcool, pouvant être obtenu par transformation de composés aliphatiques présentant au moins un groupe amino tertiaire dans la molécule avec des oxydes d'alkylène et la réaction est accélérée par un chauffage supplémentaire de l'outil (2).

2. Procédé selon la revendication 1, **caractérisé en ce que** l'outil est chauffé à une température de 40 à 45°C.

3. Procédé selon la revendication 1, **caractérisé en ce que** les micro-ondes sont introduites dans la cavité en au moins deux endroits qui sont à une certaine distance l'un de l'autre.

4. Procédé selon l'une quelconque des revendications 1 à 3, **caractérisé en ce que** le temps de démoulage est réduit de 20% grâce à l'irradiation avec une énergie provenant de micro-ondes.

5. Dispositif pour la réalisation du procédé selon l'une quelconque des revendications 1 à 4, comprenant un outil (2) avec une cavité, qui est entourée, dans toutes les zones partielles, de manière étanche aux micro-ondes et d'un blindage métallique (3) et reliée à au moins un magnétron (4), **caractérisé en ce que** l'outil est pourvu d'au moins un dispositif de chauffage supplementaire (11) dans au moins une des moities d'outil (7, 8).

6. Dispositif selon la revendication 5, **caracterise en ce que** la liaison entre le magnetron (4) et la cavite est fermée par une fenetre (5) permeable aux micro-ondes.

7. Dispositif selon la revendication 6, **caractérisé en ce que** la fenetre (5) delimite la cavite ä fleur par rapport ä la surface.

8. Dispositif selon l'une quelconque des revendications 1 à 7, **caractérise en ce que** la cavite est pourvue d'au moins une ouvertüre de remplissage (6) pour le melange reactionnel et **en ce que** l'ouverture de remplissage (6) peut etre fermee par un dispositif de blindage pour les micro-ondes.

9. Dispositif selon l'une quelconque des la revendication 1 à 8, **caractérisé en ce que** le dispositif de blindage est pourvu d'un dispositif d'actionnement automatique et est ferme par le dispositif d'actionnement au moins pendant l'introduction des micro-ondes.

10. Dispositif selon la revendication 8 ou 9, **caractérisé en ce que** le dispositif de blindage est form6 par une soupape (7) au moins resistante au vide.

11. Dispositif selon l'une quelconque des revendications 5 ä 10, **caractérisé en ce que** la cavite peut etre mise sous vide.
